# EUROPEAN PATENT APPLICATION

(11) **EP 4 790 798 A1**
(43) Date of publication of application: **12.08.2026**
(21) Application number: 25867268.2
(22) Date of filing: 24.06.2025
(51) Int. Cl.: H01M 10/6571, H01M 10/615, H01M 10/653, H01M 10/625, H01M 10/052, H01M 50/264, H01M 50/249

(54) **HEATING ASSEMBLY, BATTERY PACK, AND VEHICLE**

(30) Priority: 16.12.2024 KR 20240186623
(71) Applicant: LG ENERGY SOLUTION, LTD., Seoul 07335 (KR)
(72) Inventor: KIM, Hyun Jung, Daejeon 34122 (KR); LEE, Jung Hoon, Daejeon 34122 (KR); JANG, Cheol Han, Daejeon 34122 (KR); KIM, Daejeong, Daejeon 34122 (KR)
(74) Representative: Goddar, Heinz J.
(86) International application number: PCT/KR2025/008787
(87) International publication number: WO 2026/134481

(57) **Abstract**

A heating assembly includes a base member, a heat generating member provided on one or both sides of the base member, and a heat transfer member covering the heat generating member and contacting a battery cell to transfer heat to the battery cell.

## Description

### [Technical Field]

The present disclosure relates to a heating assembly, a battery pack, and a vehicle, and more particularly, to a heating assembly for adjusting temperature conditions of a lithium-sulfur cell, and a battery pack and a vehicle including the same.

### [Background Art]

As the application field of secondary batteries has expanded to electric vehicles (EVs) and energy storage systems (ESSs), lithium-ion secondary batteries with relatively low energy storage density (~250 Wh/kg) relative to weight have limitations in application.

In contrast, lithium-sulfur secondary batteries have come to prominence as a next-generation secondary battery technology because they may theoretically implement high energy storage density (~2,600 Wh/kg) relative to weight.

Lithium-sulfur secondary batteries are battery systems using a sulfur-based material having a sulfur-sulfur bond as a positive electrode active material and lithium metal as a negative electrode active material. These lithium-sulfur secondary batteries have the advantage that sulfur, the main material of the positive electrode active material, is abundant worldwide, non-toxic, and has a low weight per atom.

When lithium-sulfur secondary batteries are discharged, lithium, a negative electrode active material, releases electrons and is ionized and oxidized, and a sulfur-based material, a positive electrode active material, accepts electrons so as to be reduced. At this time, the oxidation reaction of lithium is a process in which lithium metal releases electrons and is converted into a lithium cation.

In addition, the reduction reaction of sulfur is a process in which a sulfur-sulfur bond accepts two electrons and is converted into a sulfur anion. The lithium cation generated by the oxidation reaction of lithium is transferred to a positive electrode through an electrolyte and combines with the sulfur anion generated by the reduction reaction of sulfur to form a salt.

The lithium-sulfur cells (batteries) with the above characteristics may be widely used not only in automobiles but also in aircraft because of a high energy density per weight. However, considering a usage environment, a heating device is required to maintain the cell temperature at 30°C.

In other words, lithium-sulfur cells have a high energy density per weight, so they are highly likely to be used in aircraft that require weight reduction. However, aircraft may fly at various altitudes from the atmosphere to the stratosphere. For example, considering the environment of aircraft used in the stratosphere, the external temperature is about -85°C, and it is difficult to meet the temperature conditions required for operating cells with only an insulation layer inside a pack. Therefore, aircraft require a heating structure instead of a cooling structure like general batteries applied to automobiles and also require even weight reduction, it is difficult to use existing heating devices that are large in volume and weight as they are.

### [Disclosure]

### [Technical Problem]

The present disclosure provides a heating assembly capable of easily meeting the temperature conditions required for operating a lithium-sulfur cell and reducing the volume and weight, and a battery pack and a vehicle.

### [Technical Solution]

According to an embodiment of the present disclosure, a heating assembly includes a base member, a heat generating member provided on one or both sides of the base member, and a heat transfer member covering the heat generating member and contacting a battery cell to transfer heat to the battery cell.

The heat generating member may be a heating wire or a surface heating element.

A material of the heat transfer member may be a thermal resin.

The heat transfer resin may be a urethane resin.

The heat transfer member may spread heat generated by the heat generating member to battery cells and adhesively fix the battery cells.

According to an embodiment of the present disclosure, a battery pack includes a heating assembly, and a cell block assembly including at least one battery cell and contacting one or both sides of the heating assembly.

The battery pack may further include a pack housing accommodating the heating assembly and the cell block assembly.

The cell block assemblies may be disposed on both sides with the heating assembly in between, and the both cell block assemblies may be fastened to each other.

The battery pack may further include a fastening member fastening the both cell block assemblies together, wherein, when the both cell block assemblies are fastened using the fastening member, the heating assembly may be in close contact with and firmly fixed between the both cell block assemblies.

The pack housing may include a lower tray and an upper cover.

The battery cell may be a lithium-sulfur cell.

### [Advantageous Effects]

According to the heating assembly, the battery pack, and the vehicle of the present disclosure, the temperature inside the battery pack may be maintained at an appropriate operating temperature of the battery cell by using the heating assembly, thereby reducing the volume and weight of the battery pack. For example, even in extreme situations in which the external temperature is about -85°C, the temperature conditions required for operating the battery cell may be met.

In addition, heat generated by a heat generating member may be evenly transferred to the battery cells through a heat transfer member constituting the heating assembly, and by applying a thermal resin as the heat transfer member, the heating assembly and a cell stack in which the battery cells are stacked may be mutually fixed.

### [Description of Drawings]

FIG. 1 is a diagram illustrating a vehicle equipped with a battery pack.
FIG. 2 is a perspective view of a battery pack.
FIG. 3 is an exploded perspective view of a battery pack.
FIG. 4 is a perspective view illustrating cell block assemblies are coupled on both upper and lower sides with a heating assembly in between.
FIG. 5 is a cross-sectional view illustrating a heating assembly firmly fixed between upper and lower cell block assemblies.
FIG. 6 is an exploded perspective view illustrating a heating assembly and a cell block assembly which are disassembled.
FIG. 7 is an enlarged view of portion A of FIG. 5.

### [Mode for Disclosure]

Hereinafter, a heating assembly, a battery pack, and a vehicle according to an embodiment of the present disclosure will be described in detail with reference to the accompanying drawings.

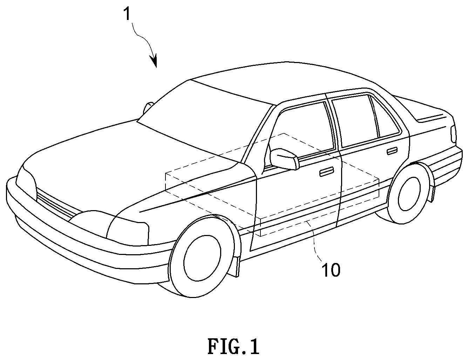

FIG. 1 is a diagram illustrating a vehicle equipped with a battery pack.

A vehicle 1, such as an electric vehicle or a hybrid vehicle, may be equipped with one or a plurality of battery packs 10. The battery pack 10 may supply electric energy required for various operations of the vehicle 1. In addition, the vehicle 1 may further include various other components in addition to the battery pack 10. For example, the vehicle 1 may further include a vehicle body, a motor, a control device, such as an electronic control unit (ECU), etc.

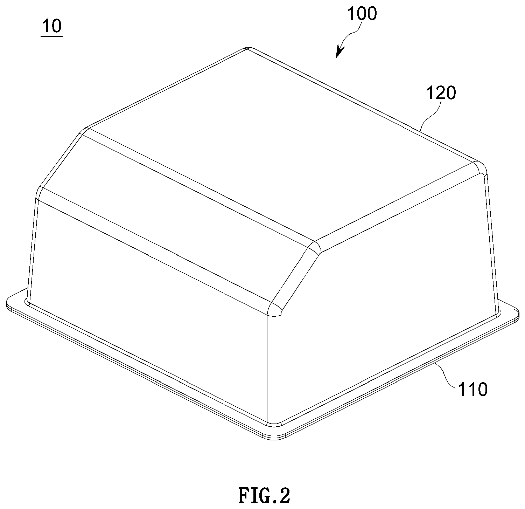

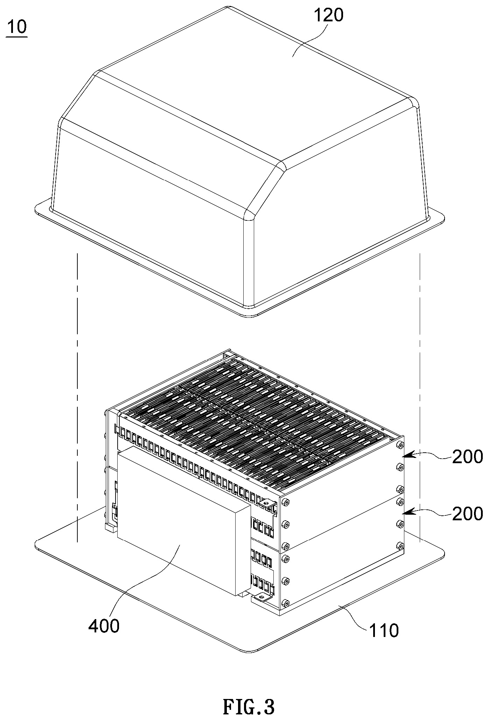

FIG. 2 is a perspective view of a battery pack, and FIG. 3 is an exploded perspective view of a battery pack.

The battery pack 10 according to the present disclosure may include a pack housing 100, a cell block assembly 200, a heating assembly, and a battery management system (BMS) 400.

The pack housing 100 accommodates the cell block assembly 200, the heating assembly, and the BMS 400 therein and may include a lower tray 110 and an upper cover 120. The cell block assembly 200 may be arranged vertically with the heating assembly in between and may be accommodated in the pack housing 100 in a mutually fastened state. The BMS 400 may be fastened to the side of the cell block assembly 200.

The cell block assembly 200 may accommodate a plurality of battery cells stacked left and right using a cell stack within a cell frame. The cell frame may include front and rear plates and both side plates, and the front and rear plates may be fastened to the side plates using a fastening member, such as a bolt. The battery cells accommodated in the cell block assembly 200 may be lithium-sulfur cells.

As described above, when the lithium-sulfur cell is discharged, lithium, a negative electrode active material lithium, releases electrons and is ionized and oxidized, and a sulfur-based material, a positive electrode active material, accepts electrons and is reduced. At this time, the oxidation reaction of lithium is a process in which lithium metal releases electrons and is converted into a lithium cation. The reduction reaction of sulfur is a process in which a sulfur-sulfur bond accepts two electrons and is converted into a sulfur anion. The lithium cation generated by the oxidation reaction of lithium is transferred to a positive electrode through an electrolyte and combines with the sulfur anion generated by the reduction reaction of sulfur to form a salt.

The lithium-sulfur cells with such characteristics may be widely used not only in automobiles but also in aircraft because of a high energy density per weight. In particular, lithium-sulfur cells may be used in high-altitude unmanned aerial vehicles, etc.

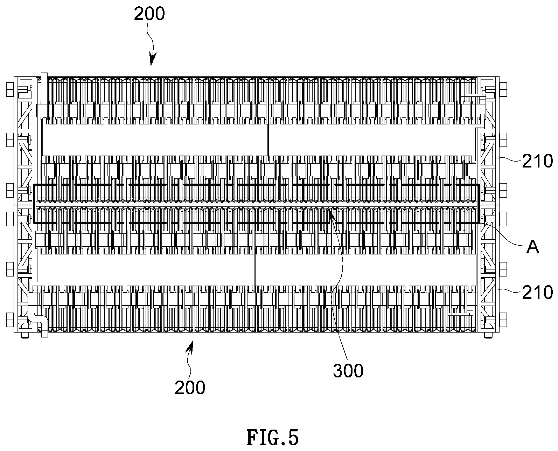

The heating assembly may be disposed between the upper layer cell block assembly 200 and the lower layer cell block assembly 200 and may be positioned therebetween when the upper and lower cell block assemblies 200 are firmly fastened to each other. The heating assembly may generate heat and transfer heat to the battery cells of the cell block assembly 200, thereby creating temperature conditions suitable for the operation of the battery cells. A detailed structure of the heating assembly will be described in detail in the description of FIGS. 5 to 7 described below.

The BMS 400 controls the battery cells to maintain them in an optimal state and extend their lifespan, may be electrically connected to the battery cells, and may also be electrically connected to the heating assembly. For example, the BMS 400 may optimize the temperature conditions of the battery cells by controlling the operation of the heating assembly. To this end, temperature sensors may be provided inside the pack housing 100 and inside the cell block assembly 200, and the amount of heat generated by the heating assembly may be controlled according to signals detected by each sensor.

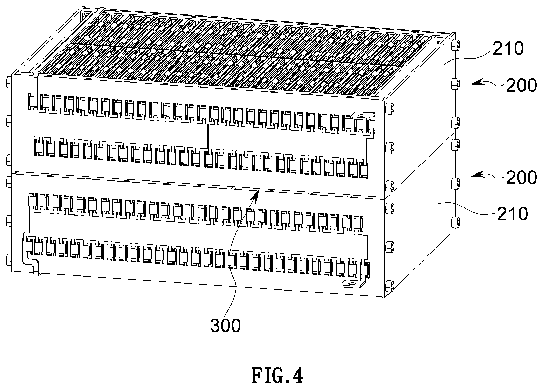

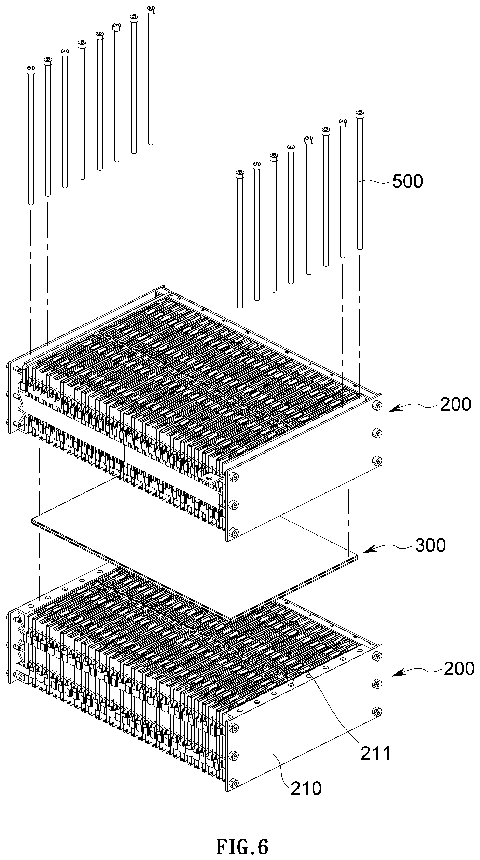

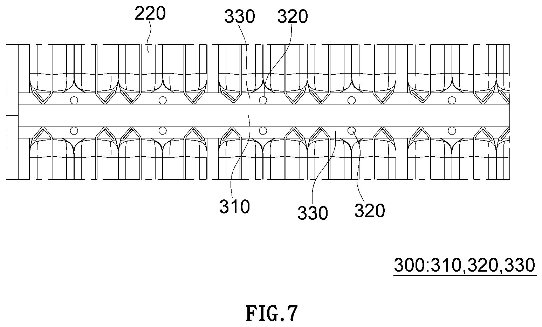

FIG. 4 is a perspective view illustrating cell block assemblies are coupled on both upper and lower sides with a heating assembly in between, FIG. 5 is a cross-sectional view illustrating a heating assembly firmly fixed between upper and lower cell block assemblies, FIG. 6 is an exploded perspective view illustrating a heating assembly and a cell block assembly which are disassembled, and FIG. 7 is an enlarged view of portion A of FIG. 5

A heating assembly 300 may be disposed between the upper layer cell block assembly 200 and the lower layer cell block assembly 200 and may be firmly fixed between the two cell block assemblies 200 when the upper and lower cell block assemblies 200 are fastened to each other by a long fastening bolt 500. Bolt through-holes 211 through which the fastening bolt 500 passes may be formed in the both side plates 210 constituting the cell block assembly 200.

As the fastening bolt 500 penetrates through the bolt through-holes 211 from top to bottom, an end portion thereof is screw-fastened to a bolt fastening hole (not shown) formed in the lower tray 110, so that the lower tray 110, the lower layer cell block assembly 200, and the upper layer cell block assembly 200 may be firmly fastened. In the case of the heating assembly 300, the fastening bolt 500 does not penetrate therethrough to directly fasten it, but when the upper layer cell block assembly 200 and the lower layer cell block assembly 200 are firmly fastened, the heating assembly 300 may be disposed therebetween and firmly fixed.

The heating assembly 300 generates heat under the control of the BMS 400 and transfers the heat to the battery cells 220 of the cell block assembly 200 and may include a base member 310, a heat generating member 320, and a heat transfer member 330.

The base member 310 is formed in a wide plate shape and may be formed of an insulating material.

The heat generating member 320 is a heating wire or a surface heating element that may operate and generate heat when power is supplied through a power supply line of the BMS 400. The amount of heat generated from the heat generating member 320 may be controlled by the BMS 400. The heat generating member 320 may be disposed on each of upper and lower surfaces of the base member 310.

The heat transfer member 330 is evenly provided on the upper and lower surfaces of the base member 310 to cover the heat generating member 320 and at the same time contact the battery cells 220 through the cell stack to transfer heat to the battery cells 220. The heat transfer member 330 may be a heat transfer resin and may be evenly applied to the upper and lower surfaces of the base member 310. This heat transfer member 330 may evenly spread heat emitted from the heat generating member 320 and uniformly transfer heat to the battery cells 220. In addition, the heat transfer member 330 may also perform the role of fixing the cell stack. To this end, a two-component (main agent + hardener) type urethane material may be applied as the heat transfer resin, but is not limited thereto and various known materials may be applied.

A pair of cell block assemblies 200 and the heating assembly 300 may be mutually bonded by adhesive force of the heat transfer member 330 constituting the heating assembly 300, and when two cell block assemblies 200 arranged with the heating assembly 300 therebetween are firmly bonded by the fastening bolt 500, the heating assembly 300 may be firmly attached to the cell block assemblies 200 therebetween, thereby strengthening a mutual bonding state.

Through the bonding and fastening structure, heat generated by the heating assembly 300 may be smoothly transferred to the battery cells 220 constituting the cell block assembly 200, and the inside of the battery pack 10 may be easily maintained at a temperature suitable for the operation of the battery cells 220.

As described above, the heating assembly, the battery pack, and the vehicle according to the embodiment of the present disclosure have been described in detail with reference to the accompanying drawings, but the present disclosure is not limited to the above-described embodiment and may be implemented in various manners within the scope of the claims.

For example, in the embodiment of the present disclosure, the battery cell may be a lithium-sulfur cell, but is not limited thereto, and may be another type of cell known in the art. In addition, in the embodiment of the present disclosure, the battery pack is illustrated as being mounted on a vehicle but is not limited thereto, and the battery pack may be mounted on other known units, such as an aircraft.

### [Detailed Description of Main Elements]

| | | | |
|---|---|---|---|
| 1: | vehicle | 10: | battery pack |
| 100: | pack housing | 110: | lower tray |
| 120: | upper cover | 200: | cell block assembly |
| 210: | side plate | 211: | bolt through-hole |
| 220: | battery cell | 300: | heating assembly |
| 310: | base member | 320: | heat generating member |
| 330: | heat transfer member | 400: | BMS |
| 500: | fastening bolt | | |

## Claims

1. A heating assembly comprising:
a base member;
a heat generating member provided on one or both sides of the base member; and
a heat transfer member covering the heat generating member and configured to contact a battery cell to transfer heat to the battery cell.

2. The heating assembly of claim 1, wherein the heat generating member is a heating wire or a surface heating element.

3. The heating assembly of claim 1, the heat transfer member comprises a thermal resin.

4. The heating assembly of claim 3, wherein the thermal resin is a urethane resin.

5. The heating assembly of claim 3, wherein the heat transfer member is configured to spread heat generated by the heat generating member to battery cells and to adhesively fix the battery cells.

6. A battery pack comprising:
the heating assembly of any one of claims 1 to 5; and
a cell block assembly including at least one battery cell contacting one or both sides of the heating assembly.

7. The battery pack of claim 6, further comprising a pack housing accommodating the heating assembly and the cell block assembly.

8. The battery pack of claim 6, wherein cell block assemblies are disposed on both sides with the heating assembly in between, and the cell block assemblies are fastened to each other.

9. The battery pack of claim 8, further comprising:
a fastening member fastening the both cell block assemblies together,
wherein, when the cell block assemblies are fastened with the fastening member, the heating assembly is in contact with and fixed between the both cell block assemblies.

10. The battery pack of claim 7, wherein the pack housing comprises a lower tray and an upper cover.

11. The battery pack of claim 6, wherein the battery cell is a lithium-sulfur cell.

12. A vehicle including the battery pack of claim 6.
